Europäisches Patentamt

European Patent Office

Office européen des brevets

(19)

(11) **EP 0 713 197 A1**

(12) **EUROPÄISCHE PATENTANMELDUNG**

(43) Veröffentlichungstag:
  22.05.1996 Patentblatt 1996/21

(51) Int. Cl.⁶: **G06K 19/16**

(21) Anmeldenummer: 95116609.9

(22) Anmeldetag: 21.10.1995

(84) Benannte Vertragsstaaten:
  **AT CH DE FR GB IT LI SE**

(30) Priorität: **15.11.1994 CH 3421/94**

(71) Anmelder: **Landis & Gyr Technology Innovation AG**
  **CH-6301 Zug (CH)**

(72) Erfinder:
  • **Stepanov, Valerij**
    **CH-6312 Steinhausen (CH)**
  • **Tompkin, Wayne Robert**
    **CH-5400 Ennetbaden (CH)**
  • **Staub, René**
    **CH-6330 Cham (CH)**
  • **Otto, Carsten**
    **D-63477 Maintal (DE)**

(54)  **Datenträger und Schreib-/Lesegerät für einen solchen Datenträger**

(57)  Ein Datenträger (1) mit einer elektronischen Schaltung (2) zur Speicherung und Verarbeitung von Daten weist einen Informationsstreifen (4) mit optisch lesbaren Markierungen (5), ein Prüffeld (6) und ein Echtheitsmerkmal (7) auf. Zur Kommunikation mit einem Schreib-/Lesegerät kann z.B. eine optische Schnittstelle (3) vorgesehen sein. Die Markierungen (5) stellen eine digitale Signatur dar. Die Prüfung der Echtheit des Datenträgers (1) kann erfolgen aufgrund der physikalischen Eigenschaften der Markierungen (5), der inneren Datenstruktur der Signatur und/oder dem Nachweis, dass eine in der elektronischen Schaltung (2) gespeicherte Prüfzahl gleich einer aus der Signatur gemäss einer vorbestimmten Funktion berechneten Zahl ist. Die Signatur kann auch als kryptografischer Schlüssel zur Verschlüsselung und Entschlüsselung der zwischen der elektronischen Schaltung (2) und dem Schreib-/Lesegerät auszutauschenden Daten dienen. Das Prüffeld (6) ist bei der Benutzung des Datenträgers (1) irreversibel veränderbar. Das Schreib-/Lesegerät enthält einen optischen Lesekopf zum maschinellen Lesen der Markierungen (5) und ist fakultativ über ein Kommunikationsnetzwerk mit einer Datenverwaltungsstelle verbunden.

Fig. 1

## Beschreibung

Die Erfindung betrifft einen Datenträger der im Oberbegriff des Anspruchs 1 genannten Art und ein Schreib-/Lesegerät der im Oberbegriff des Anspruchs 5 genannten Art.

Solche Datenträger eignen sich zur bargeldlosen Bezahlung von Dienstleistungen aller Art, beispielsweise von in öffentlichen Telefonstationen geführten Gesprächen, von Einkäufen, im Restaurant, von Parkgebühren, von Busbilletten, etc. Sie eignen sich auch als elektronische Ausweise wie Führerscheine, Krankenversicherungsscheine, Kreditkarten, Bankkarten usw. Da sie eine elektronische Schaltung zur Speicherung und Verarbeitung von Daten sowie zur Kommunikation mit einem Schreib-/Lesegerät aufweisen, sind sie auch unter Begriffen wie Chipkarte oder Smartcard, etc. bekannt. Einen Überblick über Verwendungsmöglichkeiten gibt der Artikel "Der Mikrorechner in der Brieftasche" im Heft 20/1993 der Zeitschrift Elektronik. Die Abmessungen solcher Chipkarten entsprechen beispielsweise der Norm ISO/IEC 7816.

Ein Datenträger der im Oberbegriff des Anspruchs 1 genannten Art ist aus der CH 664 635 bekannt. Bei diesem Datenträger dienen schwer fälschbare beugungsoptische Markierungen als Echtheitsmerkmal, die beim Verkehr mit einem Schreib-/Lesegerät von diesem überprüft werden. Weitere optische Markierungen dienen als Werteinheiten für grössere Geldbeträge, während kleinere Restbeträge in einem elektronischen Speicher abgelegt werden.

Der Erfindung liegt die Aufgabe zugrunde, einen Datenträger und ein zugehöriges Schreib-/Lesegerät mit einer verbesserten Sicherheit gegen Fälschung, Nachahmung oder betrügerischen Gebrauch des Datenträgers vorzuschlagen.

Die genannte Aufgabe wird erfindungsgemäss gelöst durch die Merkmale der Ansprüche 1, 7 und 10.

Nachfolgend wird ein Ausführungsbeispiel der Erfindung anhand der Zeichnung näher erläutert.

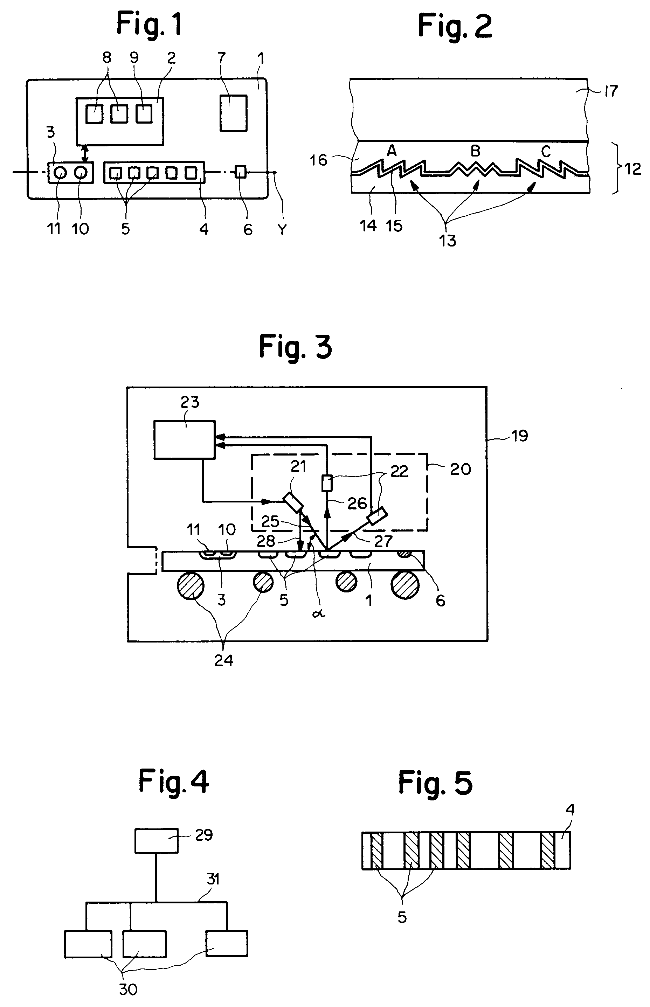

Es zeigen:  Fig. 1 einen Datenträger,
Fig. 2 einen Schichtverbund mit optischen Markierungen,
Fig. 3 ein Schreib-/Lesegerät,
Fig. 4 eine Einrichtung mit einer Datenverwaltungsstelle und
Fig. 5 einen als Strichcode ausgebildeten Informationsstreifen.

Die Fig. 1 zeigt einen Datenträger 1 mit einer elektronischen Schaltung 2 zur Speicherung und Verarbeitung von Daten sowie einer optischen Schnittstelle 3 zur Kommunikation mit einem Schreib-/Lesegerät. Der Datenträger 1 weist weiter einen Informationsstreifen 4 mit optisch lesbaren Markierungen 5, ein Prüffeld 6 und ein Echtheitsmerkmal 7 auf. Die elektronische Schaltung 2 enthält unter anderem verschiedene Speicherbereiche 8, die sich darin unterscheiden, ob die in ihnen abgelegten Informationen (Daten und/oder Programmteile) der Aussenwelt zugänglich sind und ob diese Informationen veränderbar sind. Einer der Speicherbereiche 8 ist ein elektronischer, nichtflüchtiger Informationsspeicher 9, dessen Inhalt dem Schreib-/Lesegerät zugänglich ist. Der Informationsstreifen 4 mit den Markierungen 5, die optische Schnittstelle 3 und das Prüffeld 6 sind entlang einer Achse y angeordnet, die parallel zu der Richtung ist, in der der Datenträger 1 in das Schreib-/Lesegerät einzuführen ist. Der Datenaustausch zwischen dem Datenträger 1 und dem Schreib-/Lesegerät erfolgt über die optische Schnittstelle 3, wozu diese eine Lichtquelle 10 wie z.B. eine Leuchtdiode oder eine Laserdiode zum Senden von Daten vom Datenträger 1 zum Schreib-/Lesegerät und eine lichtempfindliche Zelle 11 wie z.B. eine Photodiode, einen Phototransistor, einen Photomultiplier oder eine Solarzelle zum Empfangen der vom Schreib-/Lesegerät abgeschickten Daten aufweist. Die optische Schnittstelle 3 kann auch ein LC-Display sein, wobei das LC-Display die Intensität oder Polarisierung eines vom Schreib/Lesegerät ausgesendeten Lichtstrahls moduliert. Die Verwendung einer Solarzelle ermöglicht die Speisung des Datenträgers 1 durch das Schreib-/Lesegerät mit Lichtenergie. Anstelle der optischen Schnittstelle 3 kann der Datenträger 1 auch ein Feld mit elektrischen Kontaktflächen oder Spulen aufweisen, wobei dann der Datenaustausch auf elektrischem Weg beispielsweise gemäss der Norm ISO/IEC 7816-3 bzw. kontaktlos auf induktive Weise beispielsweise gemäss den Normen ISO/IEC 10536-2 und/oder 10536-3 erfolgt. Zur internen Steuerung des Datenträgers 1 ist vielfach ein Mikroprozessor eingesetzt.

Das Echtheitsmerkmal 7 ist beispielsweise ein von Auge sichtbares KINEGRAM®, ein Hologramm, ein Kinoform oder sonst ein beliebiges OVD (optically variable device), das z.B. direkt in die Oberfläche des Datenträgers 1 eingeprägt oder als Laminat aus Kunststofffolien, wie es auch zur Kennzeichnung von Kreditkarten, Pässen oder anderen Ausweisen Verwendung findet, in eine Vertiefung auf der Oberfläche des Datenträgers 1 aufgeklebt ist. Das Echtheitsmerkmal 7 stellt ein Sicherheitsmerkmal dar, das einem Benutzer des Datenträgers 1 einen einfachen Authenzititätsnachweis gestattet und ihn davor bewahren kann, einen gefälschten Datenträger 1 zu erstehen.

Die Markierungen 5 sind als mit ihren Berandungen nicht aneinanderstossende Felder ausgeführt, wobei vorzugsweise jedes Feld eine beugungsoptisch wirksame Struktur enthält. Eine geeignete beugungsoptisch wirksame Struktur ist z.B. ein Reliefmuster, das direkt in die Oberfläche des Datenträgers 1 eingeprägt oder gemäss der europäischen Patentanmeldung EP 401'466 A1 in ein Laminat aus Kunststofffolien eingebettet ist, wobei das Laminat gegebenenfalls bündig mit der Oberfläche des Datenträgers 1 mit dem Datenträger 1 verliebt ist. Eine Übersicht über die für die Herstellung geeigneten Materialien enthält die US-Patentschrift 4'856'857. Derartige Diffraktionsstrukturen zeichnen sich aus durch eine hohe Sicherheit gegen Fälschung oder Kopierung.

Die Fig. 2 zeigt im Querschnitt einen Schichtverbund 12 mit dreieck- (B) und sägezahnförmigen (A, C) Reliefstrukturen 13. Der Schichtverbund 12 besteht aus einer thermoplastischen Lackschicht 14, die mit einer Reflexionsschicht 15 und einer Klebeschicht 16 bedeckt ist. Auf die der Reflexionsschicht 15 gegenüberliegende Seite der Klebeschicht 16 ist eine Trägerfolie 17 aufgebracht. Die Reliefstrukturen 13 stellen phasenbeugende Gitter dar, deren Beugungswirkung durch die Parameter Linienabstand, Profil und Azimut bestimmt sind. Durch Prägen in die Lackschicht 14 werden die Markierungen 5 (Fig. 1) erzeugt. Ein Gitter mit einem asymmetrischen Profil beugt unterschiedlich viel Licht in die positiven wie in die negativen Beugungsordnungen, wobei bei einem sägezahnförmigen Profil das Verhältnis der Intensitäten der plus ersten zur minus ersten Beugungsordnung beispielsweise 8:1 betragen kann. Die Verbindung des Schichtverbundes 12 mit der Oberfläche des Datenträgers 1 (Fig. 1) erfolgt mittels eines Transferprozesses, wobei auch die Trägerfolie 17 entfernt und eine die ganze Oberfläche des Datenträgers 1 bedeckende Deckschicht aufgebracht wird. Die Deckschicht ist ein thermisch stabiler, bedruckbarer und vorteilhaft UV-härtbarer Lack, dessen Erweichungspunkt etwa 20°C höher liegt als der Erweichungspunkt der Lackschicht 14. Damit wird erreicht, dass das Beugungsverhalten einzelner Markierungen 5 durch Zufuhr thermischer Energie mittels eines sogenannten Löschkopfes, wie er beispielsweise in der Schweizer Patentschrift CH 640'075 beschrieben ist, veränderbar ist, ohne dass die dem Löschkopf zugewandte Seite des Datenträgers 1 zum Verkleben mit dem Löschkopf neigt. Die Schweizer Patentschrift CH 604'146 beschreibt, wie sich unter lokaler Warmeeinwirkung ein in eine Kunststoffoberfläche eingeprägtes, optisch wirksames Reliefmuster an der erwärmten Stelle so verändert, dass sich wieder die Struktur ausbildet, die die Kunststoffoberfläche vor dem Prägen auswies. Ein Datenträger 1 mit aus nach dem Prägen identischen Markierungen 5 ist durch das Verändern einzelner Markierungen 5 individualisierbar. Eine weitere Möglichkeit zur einfachen Individualisierung besteht in der Verwendung eines geführten Laserstrahles wie es die US Patentschrift 5'331'443 lehrt.

Die Fig. 3 zeigt ein Schreib-/Lesegerät 19, das sowohl zum maschinellen Lesen der Markierungen 5 als auch zum Datenaustausch mit der optischen Schnittstelle 3 des Datenträgers 1 geeignet ist. Das Schreib-/Lesegerät 19 enthält einen Lesekopf 20 mit einer Lichtquelle 21 und wenigstens zwei Photodetektoren 22, die elektrisch mit einer Steuer- und Auswerteeinheit 23 verbunden sind, sowie nicht gezeichnete optische Abbildungselemente zur optimalen Führung der Lichtstrahlen. Fakultativ enthält das Schreib-/Lesegerät. 19 eine Einrichtung 24 zum maschinellen Transport des Datenträgers 1. Die Lichtquelle 21 gibt, sofern eingeschaltet, einen gerichteten, vorzugsweise annähernd monochromatischen Lichtstrahl 25 ab. Zwei Photodetektoren 22 sind so angeordnet, dass sie einerseits die Intensitäten der Teilstrahlen 26, 27 der minus ersten bzw. plus ersten Beugungsordnung messen können, solange der Lichtstrahl 25 auf eine der Markierungen 5 fällt und dort gebeugt wird, und dass wenigstens einer der beiden Photodetektoren 22 das von der Lichtquelle 10 der optischen Schnittstelle 3 des Datenträgers 1 abgegebene Licht detektieren kann, sobald der Datenträger 1 vollständig in das Schreib-/Lesegerät 19 eingeführt ist. Vorzugsweise fällt der Lichtstrahl 25 unter einem Winkel $\alpha$ schräg auf die durch die Oberfläche des Datenträgers 1 definierte Ebene, wobei der Winkel $\alpha$ derart bestimmt ist, dass der Teilstrahl 26 der minus ersten Beugungsordnung in annähernd senkrechter Richtung zurückgebeugt wird. Damit der Lesekopf 20 als geräteseitige optische Schnittstelle verwendbar ist zum Datenaustausch mit der optischen Schnittstelle 3 des Datenträgers 1, gibt die Lichtquelle 21 bei schräger Richtung des Lichtstrahles 25 bevorzugt einen zweiten, annähernd senkrechten Lichtstrahl 28 ab, der auf die lichtempfindliche Zelle 11 des Datenträgers 1 fällt, wenn der Datenträger 1 bis zu seiner Endposition in das Schreib-/Lesegerät 19 eingeführt ist. Gleichzeitig befindet sich dann einer der Photodetektoren 22 senkrecht über der Lichtquelle 10 des Datenträgers 1.

Der Informationsstreifen 4 mit den Markierungen 5 und die optische Schnittstelle 3 des Datenträgers 1 sind entlang der Achse y (Fig. 1) so angeordnet, dass sich die Markierungen 5 beim manuellen Einführen oder beim maschinellen Einzug des Datenträgers 1 in das Schreib-/Lesegerät 19 hinein am Lesekopf 20 vorbeibewegen. Beim Einführen bzw. Einzug des Datenträgers 1 wird die Lichtquelle 21 eingeschaltet und die Steuer- und Auswerteeinheit 23 überprüft, ob die Intensitäten der auf die Photodetektoren 22 gebeugten Teilstrahlen 26, 27 vorbestimmten Kriterien genügen. Falls die optischen Markierungen 5 beispielsweise, wie in der Fig. 2 dargestellt, ein sägezahnförmiges Reliefprofil mit vorbestimmten Gitterabmessungen sind, prüft die Steuer- und Auswerteeinheit 23 bei jeder solchen Markierung 5, ob das Verhältnis des vom ersten Photodetektor 22 abgegebenen Signales um einen durch die Eigenschaften des Reliefprofils vorbestimmten Faktor grösser als das vom zweiten Photodetektor 22 abgegebene Signal ist. Sofern die Markierungen 5 als berandete Felder ausgebildet sind, die durch einen Zwischenraum mit anderen optischen Eigenschaften getrennt sind, erlauben die von den Photodetektoren 22 abgegebenen Signale auch auf einfache Weise die Bestimmung der Zahl der Markierungen 5, die auf dem Datenträger 1 vorhanden ist. Die Steuer- und Auswerteeinheit 23 prüft, ob diese Zahl gleich einer vorgegebenen Zahl ist. Dieser hauptsächlich auf physikalischen Eigenschaften beruhende Test ermöglicht mit hoher Sicherheit den Nachweis der Echtheit des Datenträgers 1. Bei diesen als berandete Felder ausgeführten Markierungen 5 ist eine getrennte Taktspur nicht erforderlich. Gleichwohl können eine gesonderte Taktspur und ein weiterer Photodetektor zum Lesen der Taktspur vorgesehen sein.

Für die Markierungen 5 können auch mehrere Beugungsgitter mit verschiedenen Reliefprofilen verwendet werden, die bevorzugt alle die gleiche Gitterkonstante und die gleiche Gitterorientierung aufweisen, so dass sie mit zwei Photodetektoren 22 erkennbar und unterscheidbar sind. In diesem Fall prüft die Steuer- und Auswerteeinheit 23 anhand analoger Kriterien wie oben, ob und gegebenenfalls welchem Beugungsgittertyp das von einer Markierung 5 gebeugte und detektierte Licht zugeordnet werden kann. Es ist z.B. möglich, die drei in der Fig. 2 gezeigten verschiedenen Beugungsgitter A, B und C vorzusehen, die sich in ihrer Symmetrie bezüglich der Achse y unterscheiden. Die Anordnung von beispielsweise 21 Beugungsgittern in der Reihenfolge A, B, C im Informationsstreifen 4 erzeugt somit eine innere Struktur der Gesamtheit der Markierungen 5, welche von der Steuer- und Auswerteeinheit 23 überprüfbar ist. Die Schwierigkeit, einen Datenträger 1 mit optischen Markierungen 5 zu fälschen, nimmt zu mit der Komplexität der die Markierungen 5 darstellenden Beugungsstrukturen und auch mit der Anzahl Photodetektoren 22, die zum Detektieren des Typs einer Markierung 5 im Schreib-/Lesegerät 19 eingesetzt sind.

Jede Markierung 5 stellt je nach der Komplexität der sie bildenden Diffraktionsstruktur ein Bit oder auch ein höherwertiges Zeichen dar und kann zudem Takt- oder Clockinformationen enthalten. Ein höherwertiges Zeichen wird im folgenden als durch eine Bitfolge darstellbar angesehen. Die Gesamtheit der Markierungen 5 stellt somit ein Bitmuster dar, das maschinell lesbar ist. Weist der Informationsstreifen 4 beispielsweise n Markierungen 5 auf, die je ein Bit, d.h. ein binäres Zeichen darstellen, dann liest das Schreib-/Lesegerät 19 beim Einzug des Datenträgers 1 ein Bitmuster "$b_1, b_2, b_3 ... b_n$". Einige dieser Bits $b_1, b_2, b_3$ bis $b_n$ stellen nun mit Vorteil Prüfbits dar, so dass das Schreib-/Lesegerät 19 zusätzlich zur oben beschriebenen physikalischen Prüfung anhand der Prüfbits eine Prüfung durchführen kann, ob das gelesene Bitmuster "$b_1, b_2, b_3 ... b_n$" eine innere Bitstruktur aufweist, die vorbestimmten Regeln genügt. Dies ermöglicht eine zuverlässige Unterscheidung, ob es ein reguläres Bitmuster oder ein gefälschtes Bitmuster ist. Zur Behebung von vereinzelten Lesefehlern können weiter einige der Bits $b_1, b_2, b_3$ bis $b_n$ als redundante Bits zur Fehlererkennung vorgesehen sein.

Ein Bitmuster kann allgemein als digitale Signatur S bezeichnet werden. Die digitale Signatur S muss nicht notwendigerweise gleich dem gelesenen Bitmuster "$b_1, b_2, b_3 ... b_n$" sein. Es ist auch möglich, dass das Schreib-/Lesegerät 19 mittels eines vorbestimmten Algorithmus aus dem gelesenen Bitmuster "$b_1, b_2, b_3 ... b_n$" durch Operationen aller Art ein neues Bitmuster aus k Bits "$c_1, c_2, c_3 ... c_k$" ableitet, welches als digitale Signatur S dient. Die Zahl k kann Kleiner, gleich oder grösser als die Zahl n sein. Die digitale Signatur S kann zudem Informationen enthalten, z.B. ein Ablaufdatum des Datenträgers 1, so dass das Schreib-/Lesegerät 19 keine Transaktionen mit dem Datenträger 1 durchführt, wenn dessen zeitliche Gültigkeit abgelaufen ist.

Die Verwendung eines Informationsstreifens 4 mit optischen Markierungen 5, die mit Kopiergeräten nicht kopierbar, äusserst schwer fälschbar und praktisch untrennbar mit dem Datenträger 1 verbunden sind, erschwert bereits das unberechtigte Inverkehrbringen solcher Datenträger 1. Die Betrugsmöglichkeiten sind zudem reduziert, wenn das Schreib-/Lesegerät 19 eine Echtheitsprüfung aufgrund der physikalischen Eigenschaften der Markierungen 5 allein durchführt und prüft, ob die innere Datenstruktur der Signatur S vorbestimmten Regeln genügt. Beispiele für eine innere Datenstruktur der Signatur S sind die vorerwähnte Verwendung unterschiedlicher Beugungsgitter, die in einer bestimmten Reihenfolge angeordnet sind, oder die Verwendung von Prüfbits, die nach vorbestimmten Regeln berechnet sind.

Durch eine Verknüpfung der Signatur S mit im Datenträger 1 gespeicherten Daten kann die Sicherheit gegen Fälschungen weiter erhöht werden. Beispiele solcher Verknüpfungen werden nun näher erläutert.

Bei einer ersten Art der Verknüpfung ist im Informationsspeicher 9 (Fig. 1) eine Prüfzahl P gespeichert, die allein als eine Funktion f der Signatur S: P = f(S) oder als eine Funktion g der Signatur S und weiterer im Datenträger 1 gespeicherter Daten Dp: P = g(S, Dp) berechnet ist. Beim sogenannten SLE4436 Eurochip aus der Chipserie SLE443x von Siemens oder dazu kompatiblen Chips kann z.B. die 16 Bit grosse "Aux. Data Area" zur Speicherung der Prüfzahl P verwendet werden. Beim Gebrauch des Datenträgers 1 prüft das Schreib-/Lesegerät 19 deren Echtheit, indem es die Signatur S ermittelt, vom Datenträger 1 die Prüfzahl P und, gegebenenfalls, die Daten Dp anfordert, den Funktionswert $P_f$ = f(S) bzw. $P_g$ = g(S, Dp) berechnet und die Zahlen P und $P_f$ bzw. P und $P_g$ auf Gleichheit überprüft. Die Übermittlung der Prüfzahl P und der Daten Dp erfolgt dabei mit Vorteil verschlüsselt.

Eine noch höhere Sicherheit gegen Betrugsversuche ist erreichbar, indem das Schreib-/Lesegerät 19 bei jeder Datenübermittlung eine Zufallszahl nach an sich bekannten Methoden, z.B. dem DES (Data Encryption Standard), verschlüsselt und in verschlüsselter und unverschlüsselter Form an den Datenträger 1 mitschickt. Die elektronische Schaltung 2 des Datenträgers 1 ist eingerichtet, die verschlüsselt übermittelte Zufallszahl zu entschlüsseln und mit der unverschlüsselt übermittelten Zufallszahl zu vergleichen. Eine Übertragung der Prüfzahl P und/oder anderer Daten Dp an das Schreib-/Lesegerät 19 erfolgt nur, falls die entschlüsselte Zufallszahl gleich der unverschlüsselten Zufallszahl ist. Die Abfrage des Datenträgers 1 durch ein dazu nicht berechtigtes Schreib-/Lesegerät 19 ist durch diesen einfachen Authentizitätstest ausgeschlossen.

Eine weitere Möglichkeit, eine hohe Sicherheit gegen Betrugsversuche zu erreichen, besteht darin, dass das Schreib-/Lesegerät 19 alle an die elektronische Schaltung 2 des Datenträgers 1 zu übermittelnden Befehle und/oder Daten als eine Zeichenfolge Z1 auffasst, diese Zeichenfolge Z1 mit einem Verschlüsselungsalgorithmus verschlüsselt, wobei die Signatur S als Chiffrierschlüssel dient, und an den Datenträger 1 übermittelt. Mittels des komplementären Dechiffrierschlüssels, der in einem der Aussenwelt nicht zugänglichen Speicherbereich 8 gespeichert ist, entschlüsselt die elektronische Schaltung 2 des Datenträgers 1 die empfangenen Daten in die Zeichenfolge Z2. Bei einer Verschlüsselung der Befehle und/oder Daten mit einem falschen Schlüssel, ist die Zeichenfolge Z2 nicht verständlich, so dass der Datenträger 1 weder eine Antwort an das Schreib-/Lesegerät 19 sendet noch eine Änderung in einem seiner Speicherbereiche 8 zulässt. Der Datenaustausch vom Datenträger 1 an das Schreib/Lesegerät 19 ist auf die gleiche Weise schützbar, indem die elektronische Schaltung 2 die zu übermittelnden Daten mit einem der Signatur S komplementären Chiffrierschlüssel verschlüsselt. Die übermittelten Daten sind vom Schreib/Lesegerät 19 nur interpretierbar, wenn die Entschlüsselung mittels des durch die Signatur S dargestellten Dechiffrierschlüssels korrekt erfolgte.

Durch den Einsatz eines derartigen Verfahrens ist es möglich, das Risiko des betrügerischen Aufladens eines wiederaufladbaren Datenträgers 1, z.B. einer Taxkarte zur Bezahlung von Telefongebühren, oder das Risiko des unberechtigten Beschreibens eines dazu vorgesehenen Datenträgers 1, z.B. einer Krankenversicherungskarte, äusserst klein zu halten.

Bei dieser zweiten Art der Verknüpfung dient die Signatur S also als kryptografischer Schlüssel zum Verschlüsseln und Entschlüsseln der mit der elektronischen Schaltung 2 des Datenträgers 1 auszutauschenden Daten, wobei der zur Signatur S komplementäre Schlüssel in einem der Aussenwelt nicht zugänglichen Speicherbereich 8 des Datenträgers 1 gespeichert ist. Die Signatur S stellt einen Schlüssel dar, der einerseits einem "public key" ähnlich ist in dem Sinne, dass das Schreib-/Lesegerät 19 den Schlüssel, den es zum Datenaustausch mit dem Datenträger 1 benötigt, vom Datenträger 1 mittels des Lesekopfes 20 abliest. Andererseits ist die Signatur S ähnlich einem "secret key", indem die Signatur S nur dem Schreib-/Lesegerät 19 bekannt und einer Person oder einer anderen Maschine kaum oder nur sehr schwer zugänglich ist. Die Ausdrücke "public key" und "secret key" sind im Artikel "Datenverschlüsselung in der Chipkarte" im Heft 22/1994 der Zeitschrift Elektronik näher beschrieben. Jeder Datenträger 1 weist dabei mit Vorteil eine eigene, individuelle Signatur S auf, wodurch das Risiko der missbräuchlichen Verwendung solcher Datenträger 1 weiter gesenkt werden kann.

Jedem Datenträger 1 ist ferner ein sogenannter PIN-Code (Personal Identification Number) zugeordnet, der nur dem Besitzer des Datenträgers 1 bekannt sein sollte und der dazu dient, Transaktionen zwischen dem Datenträger 1 und dem Schreib-/Lesegerät 19 nur dann zu ermöglichen, wenn der Benutzer den PIN-Code richtig eingibt. Der PIN-Code dient also dem Nachweis der berechtigten Benutzung des Datenträgers 1. Die Überprüfung des PIN-Codes kann erfolgen, indem das Schreib-/Lesegerät 19 den vom Benutzer eingegebenen PIN-Code entweder gemäss einer vorbestimmten Funktion mit der Signatur S verknüpft oder mittels der Signatur S verschlüsselt und an den Datenträger 1 überträgt, worauf der Datenträger 1 die übertragenen Daten entweder direkt oder nach Entschlüsselung mit einem gespeicherten Soll-PIN-Code vergleicht und die Antwort, ob der PIN-Code richtig eingegeben wurde, ebenfalls in verschlüsselter Form zurücksendet. Es ist auch möglich, dass der Datenträger 1 keine Daten an das Schreib-/Lesegerät 19 überträgt, wenn der Vergleich zwischen dem PIN-Code und dem Soll-PIN-Code negativ ausfällt.

Die Markierungen 5 (Fig. 1) im Informationsfeld 4 können auch in einer zweidimensionalen Matrix angeordnet sein. Die Markierungen 5 können weiter als ROM Speicher oder, falls die die Markierungen 5 darstellenden Reliefstrukturen 13 einmal irreversibel veränderbar sind, als WORM (write once read many times) Speicher dienen. Im letzteren Fall ist es möglich, dass jede Markierung 5 des WORM Speichers bei der Auslieferung des Datenträgers 1 einen vorbestimmten Kreditbetrag darstellt. Bei jeder Benutzung des Datenträgers 1, die zu einer Verminderung des Kreditbetrages führt, wird der neue, verminderte Kreditbetrag in den WORM Speicher eingeschrieben. Bei einem anderen Verfahren stellt jede Markierung 5 einen vorbestimmten Geldwert G dar. Der gesamte Kreditwert des Datenträgers 1 ergibt sich aus der Zahl der unveränderten Markierungen 5 mal diesen Geldwert G plus einem Restwert R, der im Speicher 8 abgelegt ist. Der Restwert R ist immer kleiner als der Geldwert G und stellt somit kleinere Einheiten als der Geldwert G dar. Bei der Abbuchung wird einerseits der neue Restwert R in den Speicher 8 eingeschrieben und andererseits gegebenenfalls die nötige Anzahl Markierungen 5 irreversibel verändert. Der WORM Speicher kann auch zur Speicherung anderer Daten als Geldwerten dienen. Da die Markierungen 5 Abmessungen haben können, die nur einige Mikrometer betragen, ist eine hohe Speicherdichte möglich.

Bei einer Weiterbildung der Erfindung ist auf dem Datenträger 1 das Prüffeld 6 vorgesehen, das vom Schreib-/Lesegerät 19 mit einem dazu vorgesehenen Mittel irreversibel veränderbar ist, so dass der Gebrauch des Datenträgers 1, insbesondere der erstmalige Gebrauch, nachweisbar ist, auch wenn der Datenträger 1 mechanisch und/oder elektrisch so beschädigt ist, dass die im Datenträger 1 gespeicherten Daten nicht mehr gelesen werden können. Die irreversible Veränderung des Prüffeldes 6 kann mit verschiedenen einfachen Technologien realisiert werden. Beispielsweise kann die Deckschicht des Datenträgers 1 einen Farbstoff enthalten, der bei Bestrahlung mit einer geeigneten Lichtquelle seine Farbe aufgrund einer photochemischen oder thermischen Reaktion für das menschliche Auge oder für einen IR- oder UV-Detektor verändert. Das Prüffeld 6 kann auch ähnlich einer Markierung 5 als Feld mit einer Beugnngsstruktur ausgebildet sein, wobei die Beugungsstruktur durch Zufuhr von Wärme irreversibel so veränderbar ist, dass sie beispielsweise einfallendes Licht diffus nach allen Richtungen streut und somit matt erscheint. Eine besonders einfache Ausführung ergibt sich bei einem Schreib-/Lesegerät 19 mit einer Transporteinrichtung 24, wenn als Lichtquelle 21 eine Leuchtdiode oder Laserdiode vorhanden ist, die zur irreversiblen Veränderung des Prüffeldes 6 kurzzeitig in einen Hochleistungsmodus schaltbar ist. Dabei steuert die Steuer- und Auswerteeinheit 23 die Transporteinrichtung 24 und die Lichtquelle 21 so, dass der Datenträger 1 beim Einzug oder bei der Ausgabe gestoppt wird, wenn sich das Prüffeld 6 im Brennpunkt der Lichtquelle 21 befindet, und dass dann die Lichtquelle 21 eine genügend hohe Lichtleistung zur Erzielung der gewünschten Veränderung des Prüffeldes 6 abgibt. Bei einem Schreib-/Lesegerät 19 mit manuellem Einführen des Datenträgers 1 kann eine gesonderte Lichtquelle vorgesehen sein, in welchem Fall das Prüffeld 6 irgendwo auf dem Datenträger 1 plaziert sein kann. Auch unterliegt dann der Zeitpunkt der irreversiblen Veränderung des Prüffeldes 6 keinen Beschränkungen und kann beliebig gewählt werden, solange der Datenträger 1 in das Schreib-/Lesegerät 19 eingeführt ist, z.B. bei der Eingabe des PIN-Codes oder vor einer im Informationsspeicher 4 des Datenträgers 1 vorzunehmenden Änderung. Ein bevorzugter Zeitpunkt zum Verändern des Prüffeldes 6 bei einem in einer Telefonstation eingesetzten Schreib-/Lesegerät 19 ist der Zeitpunkt, wenn die Telefonverbindung zustande gekommen ist. Anstelle einer Lichtquelle zur optischen Veränderung des Prüffeldes 6 kann auch ein Mittel zur mechanischen Veränderung, z.B. ein gegebenenfalls heizbarer Stempel oder Stanzwerkzeug vorgesehen sein.

Ein besonders hoher Schutz gegen Nachahmung ergibt sich, wenn die Deckschicht im Bereich der Markierungen 5 so bedruckt ist, dass die Markierungen 5 für einen menschlichen Betrachter nicht erkennbar sind, ohne dass die Maschinenlesbarkeit der Markierungen 5 beeinträchtigt ist. Eine weitere Möglichkeit, für das menschliche Auge nicht erkennbare Markierungen 5 herzustellen, besteht darin, beim in der Fig. 2 gezeigten Schichtverbund 12 die Reflexionsschicht 15 wegzulassen und für die Lackschicht 14 und die Klebeschicht 16 Materialien zu verwenden, die im sichtbaren Bereich unterschiedliche optische Brechungsindices mit Werten von etwa 1.5 aufweisen, wobei sich die Brechungsindices jedoch um weniger als etwa 0.2 unterscheiden. Der Unterschied in den Brechungsindices kann jedoch im IR oder UV-Bereich deutlich grösser sein, so dass die maschinelle Lesbarkeit der Markierungen 5 sicher gegeben ist. Ein solcher Schichtverbund 12 kann dann für das menschliche Auge glasklar oder farbig durchsichtig oder auch undurchsichtig erscheinen.

Der Informationsstreifen 4 (Fig. 1) und das Echtheitsmerkmal 7 sind mit der gleichen Technologie als Schichtverbund 12 herstellbar, wobei der guten Sichtbarkeit wegen die Reflexionsschicht 15 bevorzugt wenigstens im Bereich des Echtheitsmerkmals 7 vorhanden ist.

Die Fig. 4 zeigt eine Einrichtung, die eine Datenverwaltungseinrichtung 29 und mehrere Terminals 30 mit je einem Schreib-/Lesegerät 19 zur Kommunikation mit Datenträgern 1 umfasst, die einen Informationsstreifen 4 mit optischen Markierungen 5 (Fig. 1) aufweisen, wobei die Markierungen 5 eine maschinell lesbare, digitale Signatur enthalten. Die Datenverwaltungseinrichtung 29 und die Terminals 30 sind durch ein Kommunikationsnetzwerk 31 verbunden. Die Terminals 30 können unterschiedliche Funktionen erfüllen, ein Terminal 30 kann z.B. eine öffentliche Telefonstation sein, das eine gewünschte Telefonverbindung aufbaut, falls die Telefonstation vom Datenträger 1 entweder den entsprechenden Geldwert abbuchen kann oder eine Kreditlimite und eine Adresse erhält, wo der Betreiber des Telefonnetzes die anfallenden Telefongebühren einfordern kann. Ein anderes Terminal 30 kann zur Zutrittskontrolle in ein bestimmtes Gebiet eingesetzt sein. Das Schreib-/Lesegerät 19 ist mit einem optischen Lesekopf (20) (Fig. 3) zum Auslesen der Signatur des Datenträgers 1 eingerichtet und es ist vorgesehen, dass das Schreib-/Lesegerät 19 bei der Benutzung eines Datenträgers 1 dessen Signatur liest und an die Datenverwaltungseinrichtung 29 übermittelt. Auf diese Weise ist der Gebrauch des Datenträgers 1 örtlich und zeitlich verfolgbar. Bei Bedarf kann jeder Datenverkehr zwischen einem der Terminals 30 und einem Datenträger 1 aufgezeichnet werden. Dabei ist insbesondere der Fall interessant, dass bei Datenträgern 1, die als elektronische Geldbörse dienen, jeder Geldbezug und jede Geldeinzahlung (Wiederaufladen mit Geld) zusammen mit der Signatur, jedoch ohne im Datenträger 1 gespeicherte Informationen über die Identität des Inhabers, gespeichert werden kann. Dies ermöglicht eine Kontrolle jedes Datenträgers 1 darüber, ob nicht mehr Geld von der Geldbörse bezogen wird als rechtmässig eingezahlt wurde. Notfalls kann die Sperrung des Datenträgers 1 verfügt werden, ohne dass dem Betreiber der Datenverwaltungseinrichtung 29 die Identität des rechtmässigen Besitzers bekannt sein muss. Die Sperrung kann auch selektiv nur für bestimmte Dienste erfolgen. Die Datenverwaltungseinrichtung 29 kann zentral oder dezentral aufgebaut sein und mit weiteren Datenverwaltungseinrichtungen wie z.B. Kreditkartenorganisationen, Banken, Datenbanken, etc. verbunden sein.

Die vorgestellte Erfindung beinhaltet mehrere Realisierungsmöglichkeiten, die die Sicherheit eines Datenträgers gemäss dem Oberbegriff des Anspruchs 1, wie dargelegt, Stufe um Stufe erhöhen. Die Verwendung der optischen Schnittstelle 3 anstelle elektrischer Kontakte oder Spulen liefert auch einen Beitrag zur Betrugssicherheit, da der Datenverkehr zwischen dem Datenträger 1 und dem Schreib-/Lesegerät 19 externen Messgeräten kaum mehr zugänglich ist. Ferner ist die optische Schnittstelle 3 mit kleinem elektronischem Schaltungsaufwand betreibbar.

Es gibt viele weitere Möglichkeiten, einen Informationsstreifen 4 (Fig. 1) mit optischen maschinenlesbaren Markierungen 5 zu realisieren, die einen beträchtlichen Aufwand und Know How erfordern. Die Markierungen 5 können auch aus fluoreszierender Tinte bestehen und, wie in der Fig. 5 gezeigt, einen Strichcode darstellen, wobei ein langer bzw. kurzer Abstand zwischen den Markierungen 5 als Bit "0" bzw. Bit "1" interpretierbar ist. Der Nachweis der Echtheit beruht auf den physikalischen Fluoreszenzeigenschaften der Tinte. Ein dazu geeignetes Schreib-/Lesegerät 19 bestrahlt beim Einzug des Datenträgers 1 jede Markierung 5 mit einem Lichtimpuls geeigneter Wellenlänge und bestimmt anschliessend die Zeitkonstante des Nachleuchtens der fluoreszierenden Tinte, wobei die Zeitkonstante als Echtheitsmerkmal dient.

Die elektronische Schaltung 2 ist oftmals ein vorgefertigtes Modul. Die optischen Markierungen 5 (Fig. 1) können auf dem Datenträger 1 oder auf diesem Modul oder auf einem elektronischen Bauteil wie z.B. dem Informationsspeicher 4 oder dem Mikroprozessor in der elektronischen Schaltung 2 angebracht oder eingeformt sein. Dabei eignen sich zur Aufnahme der Markierungen 5 wie oben beschrieben besonders Laminate aus Kunststoffolien, die mit einem Heissstempelverfahren oder mit einem bei Zimmertemperatur aktivierbaren Kleber aufgebracht werden können. Es ist auch denkbar, ein Beugungsgitter in die Siliziumoberfläche eines Speicherchips oder des Mikroprozessors entweder mit aus der Mikromechanik bekannten Methoden einzuätzen oder die Oberfläche des Speicherchips oder Mikroprozessors mit einem UV-härtbaren Lack zu überziehen und anschliessend das Beugungsgitter einzuformen.

Das Schreib-/Lesegerät 19 ist Teil eines Gerätes das z.B. eine öffentliche Telefonstation, ein Verkaufs- oder Dienstleistungsautomat oder ein Gerät zum Prüfen eines als Ausweis dienenden Datenträgers 1 ist.

**Patentansprüche**

1. Datenträger (1) mit einer elektronischen Schaltung (2) zur Speicherung und Verarbeitung von Daten sowie zur Kommunikation mit einem Schreib-/Lesegerät (19), und mit maschinenlesbaren beugungsoptischen Markierungen (5) zum Nachweis der Echtheit des Datenträgers (1), **dadurch gekennzeichnet, dass** die Markierungen (5) eine digitale Signatur darstellen und dass in der Schaltung (2) Daten D gespeichert sind, die mit der Signatur verknüpft sind.

2. Datenträger (1) nach Anspruch 1, **dadurch gekennzeichnet, dass** die beugungsoptischen Markierungen (5) mikroskopisch feine Reliefstrukturen (15) mit einer asymmetrischen Profilform sind.

3. Datenträger (1) nach Anspruch 1 oder 2, **dadurch gekennzeichnet, dass** die Daten D eine allein aus der Signatur oder aus der Signatur und weiteren im Datenträger (1) gespeicherten Daten gemäss einer vorbestimmten Funktion berechnete Prüfzahl sind und dass die elektronische Schaltung (2) Daten erst nach Durchführung eines Authentizitätstestes mit positivem Ergebnis an das Schreib-/Lesegerät (19) übermittelt.

4. Datenträger (1) nach Anspruch 1 oder 2, **dadurch gekennzeichnet, dass** die Signatur einen kryptografischen Schlüssel zur Verschlüsselung oder Entschlüsselung der mit dem Schreib-/Lesegerät (19) auszutauschenden bzw. vom Schreib-/Lesegerät (19) erhaltenen Daten darstellt, dass die Daten D einen der Signatur komplementären kryptografischen Schlüssel darstellen und dass der Datenaustausch zwischen der elektronischen Schaltung (2) des Datenträgers (1) und dem Schreib-/Lesegerät (19) verschlüsselt erfolgt.

5. Datenträger (1) nach einem der Ansprüche 1 bis 4, **dadurch gekennzeichnet, dass** in der Schaltung (2) ein Soll-PIN-Code gespeichert ist, und dass die Schaltung (2) nur dann Daten an das Schreib-/Lesegerät (19) übermittelt, wenn ein von einem Benutzer in das Schreib-/Lesegerät (19) eingegebener und mittels der Signatur verschlüsselt übertragener PIN-Code mit dem Soll-PIN-Code übereinstimmt.

6. Datenträger (1) nach einem der Ansprüche 1 bis 5, **dadurch gekennzeichnet, dass** ein Prüffeld (6) zum Nachweis der Benutzung des Datenträgers (1) vorhanden ist und dass das Prüffeld (6) irreversibel veränderbar ist.

7. Schreib-/Lesegerät (19) für einen Datenträger (1) nach einem der Ansprüche 1 bis 5 **dadurch gekennzeichnet, dass** ein optischer Lesekopf (20) mit einer Lichtquelle (21) und Photodetektoren (22) zum Lesen der Markierungen (5) des Datenträgers (1) und eine Steuer- und Auswerteeinrichtung (23) vorhanden sind und dass die Steuer- und Auswerteeinrichtung (23) die von den Photodetektoren (22) beim Lesen der Markierungen (5) abgegebenen Signale dahingehend prüft, ob sie bestimmten Kriterien genügen und ob eine vorbestimmte Zähl von Markierungen (5) auf dem Datenträger (1) vorhanden ist.

8. Schreib-/Lesegerät (19) nach Anspruch 6, **dadurch gekennzeichnet, dass** das Schreib-/Lesegerät (19) einen von einem Benutzer eingegebenen PIN-Code mit der Signatur S gemäss einer vorbestimmten Funktion verknüpft oder mittels der Signatur S verschlüsselt und an den Datenträger (1) überträgt.

9. Schreib-/Lesegerät (19) nach Anspruch 7 oder 8 für einen Datenträger (1) nach Anspruch 6, **dadurch gekennzeichnet, dass** ein Mittel (21) zum Verändern des Prüffeldes (6) des Datenträgers (1) vorhanden ist.

10. Einrichtung, die eine Datenverwaltungseinrichtung (29) und wenigstens ein Terminal (30) mit einem Schreib-/Lesegerät (19) zur Kommunikation mit einem Datenträger (1) nach einem der Ansprüche 1 bis 4 umfasst, wobei die Datenverwaltungseinrichtung (29) und das Terminal (30) durch ein Kommunikationsnetzwerk (31) verbunden sind, **dadurch gekennzeichnet, dass** das Schreib-/Lesegerät (19) mit einem optischen Lesekopf (21) zum Auslesen der Signatur des Datenträgers (1) eingerichtet ist und dass bei der Benutzung des Datenträgers (1) die Übermittlung der gelesenen Signatur an die Datenverwaltungseinrichtung (29) vorgesehen ist.

# Fig. 1

# Fig. 2

# Fig. 3

# Fig. 4

# Fig. 5

| | | | Nummer der Anmeldung |
|---|---|---|---|
| **Europäisches Patentamt** | **EUROPÄISCHER RECHERCHENBERICHT** | | EP 95 11 6609 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | CH-A-664 635 (SODECO-SAIA S.A.) <br> * das ganze Dokument * <br> --- | 1,3,6,7 | G06K19/16 |
| A | DE-A-28 02 430 (GRETAG AG) <br> * das ganze Dokument * <br> --- | 6,9 | |
| A | CH-A-598 661 (FRITZ VON BALLMOOS) <br> * das ganze Dokument * <br> --- | 2,4 | |
| A | WO-A-92 01975 (D.A.H.T. FOUNDATION) <br> * das ganze Dokument * <br> --- | 2 | |
| A | EP-A-0 215 187 (LGZ LANDIS & GYR) <br> * das ganze Dokument * <br> ----- | 2 | |
| | | | **RECHERCHIERTE SACHGEBIETE (Int.Cl.6)** <br><br> G06K |

Der vorliegende Recherchenbericht wurde für alle Patentansprüche erstellt

| Recherchenort | Abschlußdatum der Recherche | Prüfer |
|---|---|---|
| DEN HAAG | 5.März 1996 | Herskovic, M |